# EUROPÄISCHE PATENTANMELDUNG

(11) **EP 2 055 368 A1**
(43) Veröffentlichungstag der Anmeldung: **06.05.2009**
(21) Anmeldenummer: 08167034.1
(22) Anmeldetag: 20.10.2008
(51) Int. Cl.: B01D 63/02, F24F 6/00, B01D 53/22

(54) **Gehäuseloses Hohlfasermodul**

(30) Priorität: 30.10.2007 DE 102007051751
(71) Anmelder: Membrana GmbH, 42289 Wuppertal (DE)
(72) Erfinder: Riesop, Peter August Wilhem, 45525, Hattingen (DE); Von Harten, Bodo, 42119, Wuppertal (DE)
(74) Vertreter: Schröder, Richard

(57) **Zusammenfassung**

Gehäuseloses Hohlfasermodul mit einer Längsachse,
das entlang der Längsachse einen mittleren Bereich und an den Enden einen ersten und einen zweiten Endbereich aufweist,
wobei sich die Hohlfasern vom ersten bis zum zweiten Endbereich über die gesamte Länge des Moduls erstrecken und in mindestens einer Lage um einen Stützkörper angeordnet sind,
wobei die Hohlfasern mit ihren Enden in den Endbereichen des Moduls in Vergussmasse eingebettet sind,
und wobei die Einbettung so ausgeführt ist,
dass durch die Einbettung der Modulquerschnitt in dem ersten und zweiten Endbereich des Hohlfasermoduls verschlossen ist
und dass die Lumina der Hohlfasern an beiden Enden des Moduls zugänglich sind.

## Beschreibung

Die Erfindung betrifft ein gehäuseloses Hohlfasermodul, ein Verfahren zur Herstellung eines gehäuselosen Hohlfasermoduls sowie Verwendungen eines gehäuselosen Hohlfasermoduls.

EP 1 034 834 offenbart ein gehäuseloses Hohlfasermembranmodul, bei dem ein Bündel von Hohlfasern um ein Fluidverteilungselement herum angeordnet ist. Zu behandelndes Fluid wird über das Fluidverteilungselement dem Modul zugeführt und strömt dann an den um das Fluidelement herum angeordneten Hohlfasern vorbei. Über die Hohlfasermembran kommt es zum Stoffaustausch zwischen dem an der Außenseite der Hohlfasern entlangströmenden Fluid und dem lumenseitigen Fluid.

Aufgabe der vorliegenden Erfindung ist es, ein gehäuseloses Hohlfasermodul zur Verfügung zu stellen, welches sich gegenüber dem Stand der Technik durch eine weiter vereinfachte Bauart und minimalen Druckverlust auszeichnet.

Diese Aufgabe wird gelöst durch ein gehäuseloses Hohlfasermodul mit einer Längsachse, das entlang der Längsachse einen mittleren Bereich und an den Enden einen ersten und einen zweiten Endbereich aufweist, wobei sich die Hohlfasern vom ersten bis zum zweiten Endbereich über die gesamte Länge des Moduls erstrecken und in mindestens einer Lage um einen Stützkörper angeordnet sind, wobei die Hohlfasern mit ihren Enden in den Endbereichen des Moduls in Vergussmasse eingebettet sind, und wobei die Einbettung so ausgeführt ist, dass durch die Einbettung der Modulquerschnitt in dem ersten und zweiten Endbereich des Hohlfasermoduls verschlossen ist und dass die Lumina der Hohlfasern an beiden Enden des Moduls zugänglich sind.

Durch die einfache Bauart ist das erfindungsgemäße Modul besonders leicht herstellbar, weist ein geringes Gewicht auf und verursacht nur geringe Material- und Herstellungskosten.

Das erfindungsgemäße Modul verzichtet auf ein Gehäuse und auf Endkappen, die die Hohlfaserenden aufnehmen und in den Endkappen mit einer Vergussmasse eingebettet werden müssen. Für das erfindungsgemäße Modul sind lediglich Hohlfasern, bevorzugt in Mattenform, ein Stützkörper sowie eine Vergussmasse nötig. In den Endbereichen des Moduls sind die Hohlfaserenden in Vergussmasse eingebettet. Dabei erstreckt sich im Bereich der Einbettung die Vergussmasse jeweils über den gesamten Querschnitt des Moduls, so dass der Modulquerschnitt im Bereich der Einbettung verschlossen ist. Es erfolgt somit keine stirnseitige Zuführung des aufzubereitenden Fluids. An den Stirnseiten sind nur die Hohlfaserlumina zugänglich. Das aufzubereitende Fluid wird quer zur Erstreckungsrichtung dem Modul zugeführt.

Als Vergussmasse eigenen sich im Prinzip alle dem Fachmann bekannten für die Einbettung von Hohlfasern geeignete Vergussmassen wie beispielsweise Epoxidharze oder Polyurethane.

Die erfindungsgemäßen Module sind bestens geeignet für Aufgaben, z.B. im Bereich der Luftbefeuchtung oder der Luftreinigung. Hierzu kann über die geöffneten Enden der Hohlfasern mittels geeigneter Einlass- bzw. Auslasseinrichtungen eine Flüssigkeit durch die Hohlfasern strömen. Die Außenseite der Hohlfasern wird von einem Gas, z.B. von zu befeuchtender oder zu reinigender Luft umströmt, wobei die Anströmrichtung im wesentlichen quer zu den Hohlfasern ist. Dabei zeichnen sich die erfindungsgemäßen Module durch einen besonders niedrigen Strömungswiderstand für das sie durchströmende Gas aus, so dass in der Anwendung nur ein minimaler Druckverlust erzeugt wird. Dies ist vor allem für die genannten Anwendungen von Bedeutung, da bei diesen die zu reinigende oder zu befeuchtende Luft mit nur geringem Überdruck gefahren wird.

Ein geringer Druckverlust ist insbesondere dann von Interesse, wenn bestehende Anlagen nachzurüsten sind, z.B. in der Abluftreinigung, um vorgeschriebene Grenzwerte einzuhalten. Zusätzliche Pumpen, Gebläse oder andere Einrichtungen, die eine Zwangskonvektion bewirken sind in diesem Fall dann nicht notwendig. Die erfindungsgemäßen Module sind beispielsweise auch geeignet als Ersatz für Strippkolonnen.

In einer bevorzugten Ausführungsform zeichnet sich das erfindungsgemäße gehäuselose Hohlfasermembranmodul dadurch aus, dass der Stützkörper gas- und/oder flüssigkeitsdurchlässig ist und sich zumindest über den mittleren Bereich des Hohlfasermoduls erstreckt. Im Hinblick auf einen möglichst geringen Druckverlust enthält der Stützkörper, bzw. ist der Stützkörper im wesentlichen aus einem porösen, perforierten, geschlitzten oder gitterartigen Material gebildet.

Der Stützkörper kann unterschiedliche Formen und Querschnitte aufweisen. Im einfachsten Fall weist der Stützkörper die Form einer Platte auf. Bevorzugt weist der Stützkörper einen sternförmigen Querschnitt mit mindestens drei Flanken auf. Besonders bevorzugt ist der Stützkörper ein Hohlzylinder.

Zur Erleichterung der Handhabung sind die Hohlfasern vorteilhafterweise mittels textiler Fäden in mindestens eine Hohlfasermatte mit im wesentlichen zueinander parallelen Hohlfasern eingebunden, wobei die Hohlfäden innerhalb der Matte durch die textilen Fäden gegeneinander auf Abstand gehalten werden. Derartige Matten lassen sich nach bekannten Verfahren als Wirkmatte, Webmatte oder Webbändchen, aber auch als Strick- oder als Häkelmatte herstellen. In den Fällen des Webens oder Wirkens sind die textilen Fäden die quer zu den Hohlfasern verlaufenden Web- bzw. Wirkfäden.

Diese Hohlfasermatten können nach bekannten Verfahren im wesentlichen parallel zur Längsachse des Moduls um den Stützkörper gewickelt werden. Dabei kann es sich um eine einzelne Hohlfasermatte handeln, die je nach Ausführungsform des erfindungsgemäßen Moduls, als einzelne Lage oder spiralförmig zu mehreren Lagen um den Stützkörper gewickelt wird.

Zur Erreichung eines besonders geringen Druckverlustes ist es von Vorteil, wenn die Anordnung der Hohlfäden um den Stützkörper durch spiralförmiges Wickeln von mindestens zwei übereinandergelegten Hohlfasermatten um eine Achse oder einen Kern aufgebaut ist, wobei die Hohlfasern innerhalb jeder Matte in einem gegenseitigen Abstand zueinander angeordnet sind und wobei die Hohlfasermatten so übereinandergelegt sind, dass die Hohlfäden der übereinandergelegten Hohlfasermatten in eine sich überkreuzende Anordnung gebracht sind, d. h. in einer bevorzugten Ausführungsform des erfindungsgemäßen Hohlfasermoduls kreuzen sich die Hohlfasern benachbarter Lagen. Die Herstellung von Anordnungen aus solchen übereinandergelegten Hohlfasermatten wird eingehend in der EP-A-0 285 812 beschrieben. Für solche Anordnungen kann der sich zwischen den überkreuzt angeordneten Hohlfasern ausbildende Winkel zwischen 0° und 120° liegen, als günstig haben sich Winkel zwischen 30° und 90° herausgestellt.

Um das Erfordernis des geringen Druckverlustes zu erfüllen, sollten die Hohlfasern in höchstens 15 Lagen vorliegen. Bevorzugt sind die Hohlfasern in 2 bis 10 Lagen um den Stützkörper angeordnet.

In einer weiteren bevorzugten Ausführungsform des erfindungsgemäßen Hohlfasermoduls handelt es sich bei den Hohlfasern um Hohlfasermembranen mit einer mikroporösen Struktur.

Die Membranstruktur kann über die Dicke isotrop sein, d.h. innerhalb der Membranstruktur sind die Porendurchmesser im wesentlichen konstant, sie kann anisotrop, symmetrisch oder auch asymmetrisch sein, und die Membranen können an mindestens einer ihrer Seiten eine Schicht mit wesentlich dichterer Porenstruktur, d.h. z.B. eine Haut aufweisen. Im Falle einer asymmetrischen Membran kann sich die dichtere Schicht an der Innenseite, d.h. der Lumenseite der Hohlfasern oder an der Außenseite, d.h. der dem Lumen abgewandten Seite befinden.

Bevorzugt werden Hohlfasermembranen mit einem mittleren Porendurchmesser zwischen 0,01 und 10 µm, besonders bevorzugt solche mit einem mittleren Porendurchmesser zwischen 0,1 und 3 µm eingesetzt.

Zur Bestimmung des mittleren Porendurchmessers werden je nach Größe des Porendurchmessers und je nach Membranstruktur unterschiedliche Verfahren angewandt. Für im wesentlichen isotrope Porenstrukturen werden Porendurchmesser indirekt durch ein Filtrationsexperiment bestimmt, indem eine wässrige Dextranlösung mit einer vorgegebenen Größenverteilung von Dextranmolekülen durch die Membran filtriert wird. Aus dem dabei gemessenen relativen Rückhalt als Funktion der nominalen Moleküldurchmesser wird die Porendurchmesserverteilung und daraus der mittlere Porendurchmesser berechnet. Dieses Verfahren wird beispielsweise von K. Sakai, J. Membrane Science 96 (1994), 91-130, oder von Shin-ichi Nakao, J. Membrane Science 96 (1994) 131-165, für Dialyse- bzw. Filtrationsmembranen beschrieben.

Für anisotrope Membranen, die z.B. eine Schicht mit dichterer Porenstruktur aufweisen, werden zur Bestimmung der mittleren Porendurchmesser innerhalb der dichteren Schicht ebenfalls die zitierten Bestimmungsverfahren basierend auf Filtrationsexperimenten herangezogen. Zur Bestimmung der mittleren Porendurchmesser der grobporigeren Bereiche der anisotropen Membranen wird ein bildanalytisches Verfahren nach L. Zeman u.a., J. Membrane Science 71 (1992), 221-231 eingesetzt. Dieses eignet sich für einen Porengrößenbereich zwischen 0,1 µm und 10 µm, naturgemäß sowohl für isotrope als auch für anisotrope Porenstrukturen.

Für den Einsatz in dem erfindungsgemäßen Modul haben sich Hohlfasermembranen bewährt, die eine Wandstärke zwischen 15 µm und 900 µm aufweisen, bestens bewährt haben sich Hohlfasermembranen mit einer Wandstärke zwischen 100 µm und 300 µm. Vorzugsweise beträgt der hydraulische Durchmesser des Lumens der eingesetzten Hohlfasermembranen 50 µm bis 900 µm, besonders bevorzugt sind Hohlfasermembranen mit einem hydraulischen Durchmesser des Lumens zwischen 100 µm und 400 µm.

Das erfindungsgemäße Modul eignet sich auch zur Verwendung als Wärmetauscher. Für Wärmetauscheranwendungen können auch Hohlfasern mit dichter Wand eingesetzt werden.

Das erfindungsgemäße gehäuselose Hohlfasermodul ist weiterhin bevorzugt dadurch gekennzeichnet, dass die Hohlfasern aus einem hydrophoben Material bestehen. Bevorzugt wird als hydrophobes Material ein Polyolefin, Polyethylen und besonders bevorzugt Polypropylen eingesetzt.

Um den Anschluss von Zu-, bzw. Abführleitungen zu erleichtern, sind in den Endbereichen des Moduls die Hohlfaserenden bevorzugt zusammengeführt und in Vergussmasse eingebettet. In dieser Ausführungsform des erfindungsgemäßen Hohlfasermoduls sind die Endbereiche mit dem mittleren Bereich durch jeweils einen Übergangsbereich verbunden, wobei die Endbereiche einen geringeren hydraulischen Durchmesser als der mittlere Bereich aufweisen und wobei sich im Übergangsbereich der hydraulische Durchmesser des Moduls im mittleren Bereich auf den hydraulischen Durchmesser der Endbereiche verjüngt.

Da der Stützkörper neben einem kreisförmigen Querschnitt unterschiedliche Formen aufweisen kann, kann auch das Modul mit um den Stützkörper herum angeordneten Hohlfasern nicht-kreisförmige Querschnitte aufweisen. Daher wird als Bezugsgröße für die Verjüngung des Moduls in den Übergangsbereichen der hydraulische Durchmesser angegeben. Unter dem hydraulischen Durchmesser ist der Quotient aus dem vierfachen Querschnitt und dem Umfang des Moduls zu verstehen. Bevorzugt ist der hydraulische Durchmesser in den Endbereichen um mindestens Faktor 2 kleiner als der hydraulische Durchmesser im mittleren Bereich.

Es ist weiterhin bevorzugt, dass die Vergussmassen an den Enden des Hohlfasermoduls die Übergangsbereiche und die Enden des mittleren Bereiches einschließen, d. h. die Hohlfasern liegen nur im mittleren Bereich frei. Dadurch können die Vergussmassen an den Enden des mittleren Bereiches aus Vergussmasse gebildete Dichtflächen an ihrem äußeren Umfang aufweisen, mit denen das Modul in geeigneten Haltern befestigt werden kann. So kann gewährleistet werden, dass die zu behandelnden Fluide nur durch den mittleren Teil des Moduls strömen.

Besonders bevorzugt ist die mindestens eine Lage von Hohlfasern mit einem fluiddurchlässigen Netz umhüllt, um so für einen Schutz der Hohlfasern gegen mechanische Beschädigung beim Gebrauch der erfindungsgemäßen Module zu sorgen.

Das gehäuseloses Hohlfasermodul gemäß der vorliegenden Erfindung weist bevorzugt an seinen Endbereichen Anschlussstücke für Zu- bzw. Abführleitungen auf. Besonders bevorzugt handelt es sich hierbei um aus Vergussmasse geformte zylindrische Spitzen, beispielsweise in Form einer Schlaucholive, die den Anschluss eines Schlauches oder Rohres ermöglichen. Dadurch wird der Herstellungsaufwand für das erfindungsgemäße Modul weiter minimiert.

Die Erfindung umfasst ebenfalls ein Verfahren zur Herstellung eines gehäuselosen Hohlfasermembranmoduls umfassend die Schritte, Bereitstellung einer Vielzahl von Hohlfasern in Form einer Matte, Bereitstellung eines Stützkörpers, Anordnen der Hohlfasern um den Stützkörper, wobei mindestens eine Lage Hohlfasern um den Stützkörper angeordnet wird und wobei die Hohlfaserenden in Vergussmasse eingebettet werden und wobei die Einbettung so ausgeführt wird, dass die Lumina der Hohlfasern an beiden Enden des Moduls zugänglich sind.

Bevorzugt ragen dabei die Hohlfaserenden über den Stützkörper hinaus, wobei die über den Stützkörper hinausragenden Enden der Hohlfasern zusammengeführt und in Vergussmasse eingebettet werden.

Das gehäuselose Modul ist für eine Vielzahl von Anwendungen verwendbar, die die Abreicherung von Verunreinigungen oder Toxinen aus belasteten Abgas- oder Abluftströmen, die Luftbefeuchtung oder die Verwendung als Wärmetauscher umfassen.

Besonders geeignet sind die Hohlfasermembranmodule zum Einsatz in Abluftreinigungsanlagen. Die Erfindung umfasst daher auch die Verwendung des gehäuselosen Hohlfasermembranmoduls zur Abluftreinigung umfassend die Schritte, Anströmung des Hohlfasermembranmoduls in seinem mittleren Bereich quer zur Erstreckungsrichtung der Hohlfasern, Durchströmen der Lumina mit einem Fluid, wodurch es zum Stoffübergang zwischen der an der äußeren Oberfläche der Hohlfasern vorbeiströmenden Abluft und dem lumenseitigen Fluid kommt.

Durch die Hohlfaserlumina wird bevorzugt eine Flüssigkeit geleitet, wodurch sich die Abluftinhaltsstoffe in der Flüssigkeit lösen können und somit in der Abluft abgereichert werden. Besonders bevorzugt ist das lumenseitige Fluid eine Säure oder eine Base. Für eine besonders effiziente Abluftreinigung ist es natürlich auch möglich säuredurchströmte und basendurchströmte Module zu kombinieren.

Die Erfindung wird anhand der folgenden Figuren, die bevorzugte Ausführungsformen des erfindungsgemäßen Moduls zeigen, näher erläutert.

Es zeigen:
- Figur 1:: Seitenansicht des erfindungsgemäßen Moduls mit Einbettung im ersten und zweiten Endbereich
- Figur 2 a, b:: Seitenansicht des erfindungsgemäßen Moduls mit Einbettung im ersten und zweiten Endbereich, wobei die Einbettung die Endbereiche, Übergangsbereiche und die Enden des mittleren Bereiches einschließt
- Figur 3 a, b, c:: Querschnitt des erfindungsgemäßen Moduls im mittleren Bereich
- Figur 4:: Anordnung des erfindungsgemäßen Moduls in einem Strömungskanal

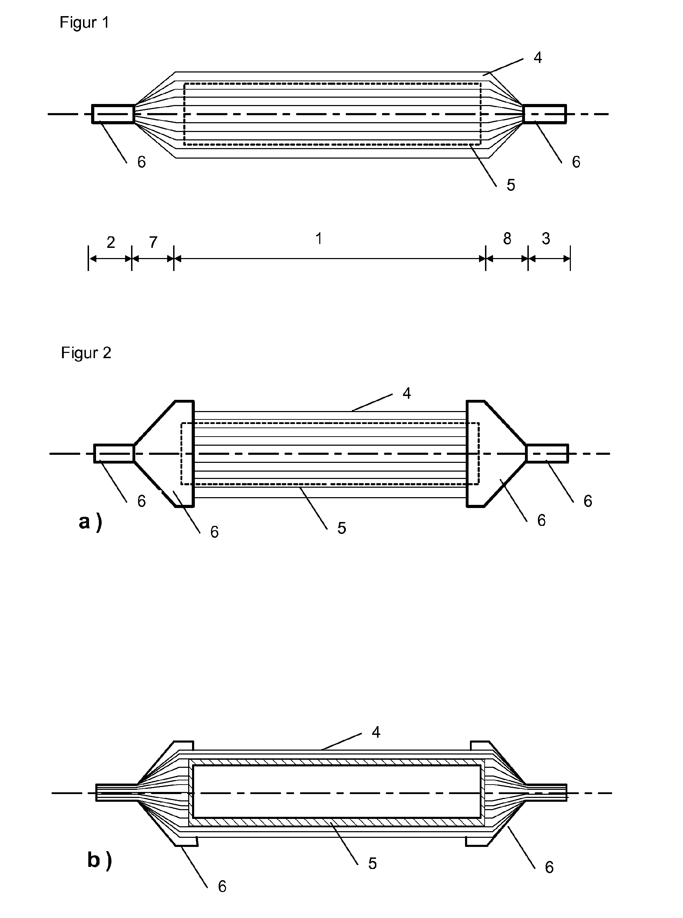

Figur 1 zeigt eine bevorzugte Ausführungsform des erfindungsgemäßen Moduls mit zwei Endbereichen 2, 3, zwei Übergangsbereichen 7, 8 und einem mittleren Bereich 1. Die Hohlfasern erstrecken sich über die gesamte Länge des Moduls vom ersten bis zum zweiten Endbereich 2, 3, wobei die Endbereiche 2, 3 durch jeweils einen Übergangsbereich 7, 8 mit dem mittleren Bereich 1 verbunden sind.

Die Hohlfasern sind in den Endbereichen 2, 3 zusammengeführt und in Vergussmasse 6 eingebettet. Die gestrichelte Linie deutet den Stützkörper 5 an, um den herum die Hohlfasern 4 angeordnet sind.

Figur 2 a zeigt eine bevorzugte Ausführungsform des erfindungsgemäßen Moduls analog zu Figur 1, mit dem Unterschied, dass die Hohlfasern nur im mittleren Bereich 1 frei liegen und dass die Vergussmassen 6 die Endbereiche 2, 3 des Hohlfasermoduls, die Übergangsbereiche 7, 8 und die Enden des mittleren Bereiches 1 einschließen.

Figur 2b zeigt einen Längsschnitt des in Figur 2a dargestellten Moduls. Die Hohlfasern erstrecken sich über die gesamte Länge des Moduls vom ersten Endbereich 2 über die Übergangsbereiche 7, 8 und den mittleren Bereich 1 bis zum zweiten Endbereich 3. Die Hohlfasern sind um den Stützkörper 5 herum angeordnet und in den Endbereichen 2, 3 zusammengeführt.

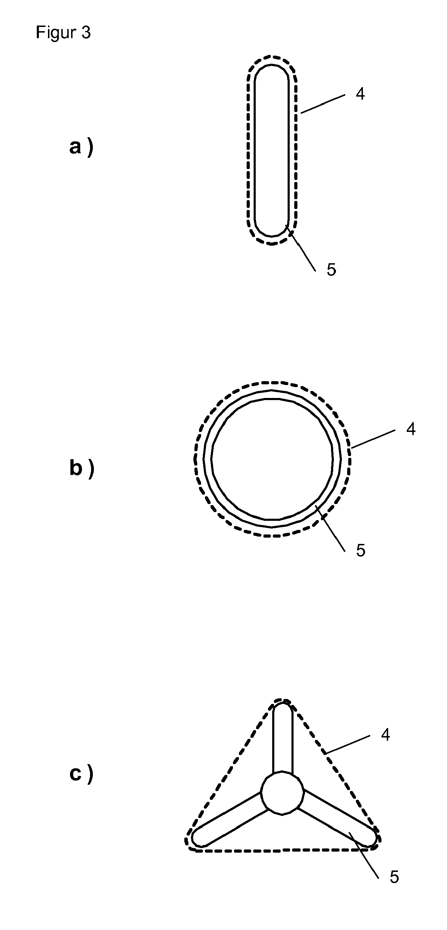

Figuren 3 a, b, c zeigen in schematischer Darstellung den Querschnitt des erfindungsgemäßen Moduls im mittleren Bereich 1. Die gestrichelte Linie soll hier die um den Stützkörper 5 herum angeordneten Hohlfasern 4 schematisch darstellen. Figur 3a zeigt einen plattenförmigen Stützkörper 5, Figur 3b einen zylindrischen Stützkörper 5 und Figur 3c einen Stützkörper 5 mit sternförmigem Querschnitt, der drei Flanken aufweist.

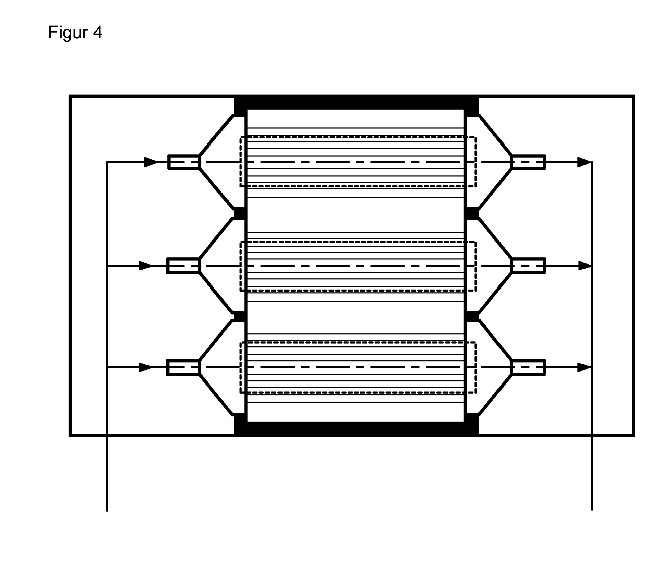

Figur 4 zeigt eine mögliche Anordnung von erfindungsgemäßen Moduln in einem Strömungskanal. Die Anströmung erfolgt quer zur Erstreckungsrichtung der Hohlfasern. Der Kanal weist Einbauten auf, die die Module aufnehmen und gewährleisten, dass das aufzubereitende Fluid nur den mittleren Bereich durchströmt und nicht an den Endbereichen vorbeiströmt. An den Endbereichen können Schlauch- oder Rohranschlüsse vorgesehen sein, die es ermöglichen, durch die Hohlfaserlumina eine Flüssigkeit zu leiten. Im Falle einer Anwendung zur Abluftreinigung können sich die Abluftinhaltsstoffe in der Flüssigkeit lösen und in der Abluft abreichern.

## Patentansprüche

1. Gehäuseloses Hohlfasermodul mit einer Längsachse,
das entlang der Längsachse einen mittleren Bereich (1) und an den Enden einen ersten und einen zweiten Endbereich (2,3) aufweist,
wobei sich die Hohlfasern (4) vom ersten bis zum zweiten Endbereich über die gesamte Länge des Moduls erstrecken und in mindestens einer Lage um einen Stützkörper (5) angeordnet sind,
wobei die Hohlfasern mit ihren Enden in den Endbereichen (2,3) des Moduls in Vergussmasse (6) eingebettet sind,
und wobei die Einbettung so ausgeführt ist,
dass durch die Einbettung der Modulquerschnitt in dem ersten und zweiten Endbereich des Hohlfasermoduls verschlossen ist
und dass die Lumina der Hohlfasern an beiden Enden des Moduls zugänglich sind.

2. Gehäuseloses Hohlfasermodul nach Patentanspruch 1, **dadurch gekennzeichnet, dass** der Stützkörper (5) gas und/oder flüssigkeitsdurchlässig ist und sich zumindest über den mittleren Bereich (1) des Hohlfasermoduls erstreckt.

3. Gehäuseloses Hohlfasermodul nach Patentanspruch 1 oder 2, **dadurch gekennzeichnet, dass** der Stützkörper (5) ein poröses, perforiertes oder gitterartiges Material enthält.

4. Gehäuseloses Hohlfasermodul nach einem oder mehreren der Patentansprüche 1 bis 3, **dadurch gekennzeichnet, dass** der Stützkörper (5) eine Platte, ein Hohlzylinder oder ein Körper mit einem sternförmigen Querschnitt mit mindestens drei Flanken ist.

5. Gehäuseloses Hohlfasermodul nach einem oder mehreren der Patentansprüche 1 bis 4, **dadurch gekennzeichnet, dass** die Hohlfasern in Form einer um den Stützkörper (5) gewickelten Matte vorliegen.

6. Gehäuseloses Hohlfasermodul nach Patentanspruch 5, **dadurch gekennzeichnet, dass** Hohlfasern benachbarter Lagen sich kreuzen.

7. Gehäuseloses Hohlfasermodul nach einem oder mehreren der Patentansprüche 1 bis 6, **dadurch gekennzeichnet, dass** die Hohlfasern in höchstens 15 Lagen vorliegen.

8. Gehäuseloses Hohlfasermodul nach einem oder mehreren der Patentansprüche 1 bis 7, **dadurch gekennzeichnet, dass** es sich bei den Hohlfasern um Hohlfasermembranen mit einer mikroporösen Struktur handelt.

9. Gehäuseloses Hohlfasermodul nach Anspruch 8, **dadurch gekennzeichnet, dass** die Hohlfasern aus einem hydrophoben Material bestehen.

10. Gehäuseloses Hohlfasermodul nach einem oder mehreren der Patentansprüche 1 bis 9, **dadurch gekennzeichnet,**
**dass** die Endbereiche (2,3) mit dem mittleren Bereich (1) durch jeweils einen Übergangsbereich (7,8) verbunden sind,
**dass** die Endbereiche (2,3) einen geringeren hydraulischen Durchmesser als der mittlere Bereich (1) aufweisen und
**dass** sich im Übergangsbereich (7,8) der hydraulische Durchmesser des Moduls im mittleren Bereich (1) auf den hydraulischen Durchmesser der Endbereiche (2,3) verjüngt.

11. Gehäuseloses Hohlfasermodul nach Patentanspruch 10, **dadurch gekennzeichnet, dass** die Vergussmassen (6) an den Enden des Hohlfasermoduls die Übergangsbereiche (7,8) und die Enden des mittleren Bereiches (1) einschließen.

12. Gehäuseloses Hohlfasermodul nach Patentanspruch 11, **dadurch gekennzeichnet, dass** die Vergussmassen (6) am Ende des mittleren Bereichs (1) an ihrem äußeren Umfang eine Dichtfläche aufweisen

13. Gehäuseloses Hohlfasermodul nach einem oder mehreren der Patentansprüche 1 bis 12, **dadurch gekennzeichnet, dass** die mindestens eine Lagen von Hohlfasern mit einem fluiddurchlässigen Netz umhüllt sind.

14. Verfahren zur Herstellung eines gehäuselosen Hohlfasermembranmoduls umfassend die Schritte Bereitstellung einer Vielzahl von Hohlfasern in Form einer Matte, Bereitstellung eines Stützkörpers, Anordnen der Hohlfasern um den Stützkörper, wobei mindestens eine Lage Hohlfasern um den Stützkörper angeordnet wird und wobei die Hohlfaserenden in Vergussmasse eingebettet werden.

15. Verwendung eines gehäuselosen Hohlfasermembranmoduls gemäß einem oder mehreren der Ansprüche 1 bis 14 zur Abluftreinigung umfassend die Schritte, Anströmung des Hohlfasermembranmoduls in seinem mittleren Bereich quer zur Erstreckungsrichtung der Hohlfasern, Durchströmen der Lumina mit einem Fluid, wodurch es zum Stoffübergang zwischen der an der äußeren Oberfläche der Hohlfasern vorbeiströmenden Abluft und dem lumenseitigen Fluid kommt.
